# EUROPEAN PATENT SPECIFICATION

(11) **EP 3 303 681 B1**
(45) Date of publication and mention of the grant of the patent: **18.12.2019**
(21) Application number: 16721950.0
(22) Date of filing: 03.05.2016
(51) Int. Cl.: D06F 37/22

(54) **VIBRATION DAMPING DEVICE**
SCHWINGUNGSDÄMPFER
AMORTISSEUR DE VIBRATION

(30) Priority: 29.05.2015 ES 201530757
(43) Date of publication of application: 11.04.2018
(73) Proprietor: BSH Hausgeräte GmbH, 81739 München (DE)
(72) Inventor: GRACIA BOBED, Ismael, 50194 Zaragoza (ES)
(86) International application number: PCT/IB2016/052503
(87) International publication number: WO 2016/193833

(56) References cited:
- EP-A2- 1 754 908
- WO-A1-2011/070092
- WO-A1-2013/175363
- WO-A1-2013/175372
- WO-A1-2015/151020

## Description

The present invention relates to a vibration damping device of the radial type to damp the oscillation occurring in an oscillating element, which is particularly adequate to damp vibrations of the tub of a washing or drying machine.

Washing and drying machines having a washing drum housed in a rotating manner in a tub usually have a vibration damping device, which connects the tub to the housing. By means of the vibration damping device, vibrations generated by the rotatory movement of the drum are damped.

Vibrations are transmitted by the damping devices so as to avoid that the movement of the oscillating group (set: tub, washing drum and motor) is transmitted directly to the housing of the washing machines and provokes vibrations and noise therein. To absorb these vibrations, lineal damping systems are known, comprising cylinder-piston damping devices such as the free-stroke damper described in the publication EP 1 754 908 A2, which have a short stroke without a frictional force. These dampers act basically in those stages in which the rotation speed of the washing drum is accelerating or decelerating by action of the motor of the machine, i.e. when the oscillating movements of the oscillating group are longer due to the fact that the inertias are bigger, so that the length of the free stroke is exceeded with no friction of the damper and this performs its braking action. When the load present in the washing drum is balanced and higher and more stable revolution regimes are reached, the oscillating movements have a lower amplitude and the piston displacement is reduced, in such a manner that it moves within the range of the free stroke with no frictional force being exerted. With this, the force being transmitted by the damping device to the housing and, therefore, the vibrations and the noise, can be eliminated or reduced. Nevertheless, these lineal vibrations dampers having free stroke are expensive.

Also radial damping devices are known, whose design is different from that of linear dampers. In radial damping devices such as the one being described, for example, in the publication WO 2011/070092 A1, the required frictional force is achieved in a radial manner and, therefore, friction is caused by the rotation of an axis that, in turn, is actuated by a rigid arm extending from the tub. This is an example of a pivoted lever and the friction occurs on the axis and in a radial manner and, due to this, it does not impact directly on the housing and, then, does not transmit the vibrations.

Additionally, there are free-stroke radial dampers such as the one described in the publication WO 2013/175363 A1. However, these dampers are expensive and complex to be manufactured. WO2013/175372 discloses a vibration damping device according to the preamble of claim 1.

Therefore, there is a need to provide a free-stroke radial damping device, which can be manufactured more easily and at lower costs than those known from the state of the art.

The present invention provides a solution to overcome these technical problems by a vibration damping device and a washing or drying device according to the respective independent claim attached. Preferred embodiments of the invention are defined in the dependent claims, the subsequent description and the figures of the drawing attached.

A first inventive aspect of the invention relates to a vibration damping device for a tub of a washing or drying machine having a housing, the device comprising a first articulating piece, provided to be connected to the tub in an articulated manner by means of a first articulation that allows rotation about a first rotation axis, and connected to a second articulating piece in an articulated manner by means of a second articulation that allows rotation about a second rotation axis, and the second articulating piece being provided to be connected to the housing in an articulated manner by means of a third articulation that allows rotation about a third rotation axis, in which at least one from the first articulation, the second articulation and the third articulation is an articulation that provides frictional resistance to rotation, wherein the distance between the rotation axes of an articulating piece is variable, while the articulation(s) that provide frictional resistance to rotation do not exert frictional force.

In a radial damping device, an articulation that provides frictional resistance to rotation or a friction articulation is to be understood as an articulation in which the friction values during a rotation of the same exceed 10 N, the values ranging preferably from 20 N to 120 N and, more preferably, from 30 N to 60 N.

The articulation providing frictional resistance to rotation comprises a bushing which is crossed in the rotation axis by a bolt fixedly arranged_at at least one lug, so that a friction element is arranged being trapped between the bushing and the bolt. In a preferred manner, the bolt is fixedly connected to two lugs preferably arranged in a U-shaped configuration, each on one side of the bushing, what makes the structure of the articulation more rigid. Another possibility is that the articulation providing frictional resistance to rotation comprises a bushing which is crossed in the rotation axis by a bolt connected to at least one lug, so that a friction element is arranged being trapped between the bushing and the at least one lug. In a preferred manner, the bolt is connected to two lugs preferably arranged in a U-shaped configuration, each on one side of the bushing, what makes the structure of the articulation more rigid. Both lugs can clamp the bushing strongly and have a friction element between the bushing and the same. Obviously, the articulation providing frictional resistance to rotation can have the friction element between the bushing and the bolt and between the bushing and the at least one lug at the same time. In this manner, the friction surface is increased if necessary.

The bushing can be arranged at an end of one of the articulating pieces and, then, the lugs can be arranged at an end of the other articulating piece and/or in the tub and/or in the housing, or the bushing can be arranged in the tub and/or in the housing and the lugs can be arranged at an end of one of the articulating pieces. With this, the articulation providing resistance to rotation can be arranged in any of the three, i.e. first, second and third articulation. Preferably, the friction element is made of a high-compression material, in particular an expanded polyurethane sponge, e.g. from Cellasto ®.

The advantage of this damping device consists in having a free-stroke length, i.e. a working area in which it exerts no frictional or damping force. This free-stroke area is achieved in a very simple manner by extending or contracting one of the articulating pieces with no rotatory movement occurring in the articulation or in the articulations providing frictional resistance to rotation. In this manner, a damping device is achieved having a varying frictional force ranging from nearly 0 N to the nominal frictional force defined for the device. The nominal frictional force of the damping device varies depending upon the requirements for the utilization of the same.

The free-stroke damping device according to the invention is mainly characterized by two properties, namely, frictional or damping force and the free-stroke length. This means that a damping device characterized by a frictional force amounting to a 60 N value and a free stroke amounting to 5 mm behaves in such a manner that it exerts no frictional force within the first 5 mm stroke from the resting position of the damping device, both in the direction of traction and of compression, and once this 5 mm distance has been covered, it exerts a 60 N frictional force always in the direction opposite to the displacement direction. Therefore, the damping device of the invention has the advantage consisting in having a free-stroke length defined by the variable distance between the rotation axes of the articulating piece in which it does not exert frictional force. This reduces the transmission of vibrations to the housing and the consequent noised generated by these vibrations. In this manner, the damping device exerts a frictional force when the variation of the distance between the rotation axes of one of the articulating pieces exceeds this free-stroke length. This happens when the oscillations of the tub are big. On the contrary, it exerts no frictional force when the variation of the distance between the rotation axes is smaller than the free-stroke length of the damping device according to the invention. This happens when the oscillations of the tub are small, what makes possible to have a vibration damper with a variable frictional force adapting to the frictional forces in the case of washing or drying machines depending upon the requirements in each of the stages of the washing or drying program.

For example, the frictional force required in the acceleration and deceleration stages of the washing drum of the tub of the washing machine is very high due to the inertias occurring in the oscillating group, which cause big displacements of the same. On the contrary, the frictional force required in constant speed stages of the drum of the washing machine is very low since the displacements of the oscillating group are very small. When a spin cycle at maximum revolutions is taking place, the required damping is minimal and, for that reason, there are free-stroke damping devices that do not exert any frictional force, thereby reducing the noise levels of the washing or drying machine.

The reason to leave this free-stroke distance without any frictional force being exerted is, as it has been pointed out, that the friction articulations act only in stages in which the displacement of the tub is very big and, if it is not damped, contacts may occur inside the washing machine, which could damage any component or cause the displacement of the washing or drying machine or noises disturbing for the user. When the displacement of the tub is small, no frictional force is exerted, the noise levels of the electrical household appliance being thereby reduced, what results in the user's comfort.

In a facultative embodiment of the vibration damping device, the angle formed by the orthogonal projection of the first rotation axis and of the second rotation axis on a plane perpendicular to a torsion axis of the first articulating piece and/or the angle formed by the orthogonal projection of the second rotation axis and of the third rotation axis on a plane perpendicular to a torsion axis of the second articulating piece is variable.

The torsion axis of an articulating piece is the axis resulting from the shortest line connecting the rotation axes to which an articulating piece is connected. In the aforementioned particular embodiment, it is allowed that at least one of the articulating pieces rotates about its torsion axis.

The movements occurring in the tub are omnidirectional and, therefore, take place in every direction in the space. On the contrary, the dampers are generally lineal and only damp in one direction in the space. This has as a consequence that the movements and forces suffered by the dampers in the rest of directions, that are not the working direction of the dampers, make them wear down and age, being possible that this alters their characteristics and even damages them.

Therefore, the damping device of the invention has the advantage of being adapted to absorb the possible vibrations originated in any direction in the space, by means of the torsional freedom of at least one of its articulating pieces. This is also a great advantage to make the lifetime of the damping device longer. In this manner, it is avoided that the forces suffered by the damping device in the rest of directions, that are not the working direction, may damage it or cause changes in one of its main properties such as the frictional force. This embodiment can be independent from the embodiment of a rotational damper having a variable distance between rotation axes in an articulating piece but, then, it would be a damper with no free stroke.

In a facultative embodiment, the vibration damping device comprises the first articulating piece with a first end and a second end provided to be connected to the tub by means of the first articulation in an articulated manner, the second articulating piece with a first end and a second end, the first end of the second articulating piece being connected to the first end of the first articulating piece by means of the second articulation in an articulated manner, and the second end of the second articulating piece being provided to be connected to the housing by means of the third articulation in an articulated manner, wherein the first end and the second end of at least one of the variable articulating pieces are connected having limited freedom of longitudinal movement one respect to another between two limiters.

A variable articulating piece is to be understood as an articulation that can be extended or compressed in length. The length of the articulating piece is to be understood as the distance between the rotation axes, which joins the articulating piece together.

The advantage of a damping device having limiters in one of the articulating pieces is that the limiters allow to control in a simple and precise manner when the damper does not exert frictional force and when it does. The limiters help define which is the free-stroke length within which no frictional force has to be exerted, which is the distance existing between the limiters. In this manner, the limiter acts as a device determining the beginning of the frictional force.

Facultatively, the limiters can be integrated in the own articulating piece or can be fixed to the articulating piece in different ways such as, for example, in a positive fit, by clip, welding, using adhesive means, using additional fixing elements or any other equivalent fixing system. The free-distance length between the limiters amounts to 1 mm to 30 mm, preferably to 3 mm to 20 mm and, more preferably, to 5 mm to 10 mm.

The maximum variation of distance between the rotation axes is the distance comprised between the limiters, i.e. if the distance between two rotation axes amounts to 100 mm and the limiters comprise a 10 mm distance, the distance between the rotation axes will never amount to less than 90 mm and to more than 110 mm.

These limiters will determine when the frictional force of the damping device starts to be exerted. When the displacement between rotation axes of an articulating piece equals the length existing between the resting point and the limiter arranged in the direction opposite to the direction of movement, the limiter acts as a triggering device for the friction of the damper and the damper starts exerting frictional force opposing the displacement. When the direction of movement changes to the opposite direction, the damper will not act while the displacement does not equal the length between limiters. When the displacement exceeds the length between limiters, the damper starts exerting frictional force in the direction opposite to the displacement.

The object of this damping device is having the possible maximum length between limiters to reduce the noise as much as possible, provided that the proper functioning of the device in which this damping device is installed, preferably a washing or drying machine, is guaranteed.

In a facultative embodiment, the damping device comprises a first articulating piece with a first end and a second end provided to be connected to the tub by means of the first articulation in an articulated manner, a second articulating piece with a first end and a second end, the first end of the second articulating piece being connected to the first end of the first articulating piece by means of the second articulation in an articulated manner, and the second end of the second articulating piece being provided to be connected to the housing by means of the third articulation in an articulated manner, wherein the first end and the second end of at least one of the variable articulating pieces are connected having freedom of torsional movement one respect to another.

This embodiment makes possible that the damping device can face the omnidirectional vibrations generated in the tub, what advantageously makes the lifetime of the damping device longer and avoids the loss of properties due to the ageing of the same caused by the forces suffered in the rest of directions different from the working direction. In this manner, displacements of the electrical household appliances or noises disturbing for the user of the washing or drying machine as a consequence of the ageing and the loss of properties of the damping device are prevented.

In a facultative embodiment, the connection between the first end and the second end of at least one variable articulating piece comprises a hole at an end and a shaft at the other end, which is inserted into the hole having freedom of lineal movement. The hole is preferably a through hole. This is a very economical and simple manner to obtain a variable articulating piece. By means of the displacement that the shaft has in the hole, the variation in length of the variable articulating piece is achieved and, therefore, that this can extend and contract. Furthermore, the limiters delimit in this case the length to which the variable articulating piece can be extended or contracted.

The shaft can be at any end of the variable articulating piece and/or in the tub and/or the housing. Also the hole can be at any of the two ends of the variable articulating piece and/or in the tub and/or in the housing.

The perimeter of the hole needs to be bigger than the perimeter of the shaft to allow torsion of the articulating piece.

In a facultative embodiment, the connection between the first end and the second end of the articulating piece comprises a hole at an end and a shaft at the other end, which is inserted into the hole having freedom of torsional movement. The advantage of this embodiment consists in making possible that at least one of the articulating pieces can rotate about its torsion axis absorbing those forces arriving at the damping device from all directions in the space, the lifetime of the damping device becoming thereby longer and its ageing and noises disturbing for the user being thereby avoided throughout the lifetime of the appliance containing said damping device. As it has been mentioned before, this embodiment can be independent from a free-stroke damper but fits perfectly in the free-stroke damper of the invention.

In a facultative embodiment, the variable articulating piece is connected to at least one articulation by means of a bolt arranged at the rotation axis having freedom to rotate and the bolt is fixedly arranged at an end of the variable articulating piece forming a connecting piece.

This embodiment has the advantage of reducing both the number of pieces and the cost of the damping device. Its manufacturing process is also facilitated and reduced in price.

In a facultative embodiment, the second articulating piece comprises additionally two U-shaped lugs at its first end, each comprising an orifice and being arranged spaced apart from one another, the first end of the first variable articulating piece is the connecting piece that is connected to the orifices of the lugs, and the shaft arranged at the second end of the first variable articulating piece is inserted into the hole of the connecting piece.

In the case of the connection comprised between the second articulating piece and the connecting piece, the relative size of the orifices of the lugs and of the ends of the connecting piece inserted into them is such that the connection between the connecting piece and the second articulating piece has clearance enough to allow rotation of the connecting piece about the rotation axis of the articulation.

The U-shaped lugs can be at any end of both articulating pieces and/or in the tub and/or in the housing. In the same way, the connecting piece can be placed at the first articulation and/or second articulation and/or third articulation.

In a facultative embodiment, the shaft comprises the limiters and the connecting piece is arranged between both of them.

In this manner, it is achieved to have a free-stroke length for the damping device which is the distance existing between the limiters. While the displacement of the tub is smaller than the distance between limiters, the variable articulating piece varies its length while the connecting piece rotates about the rotation axis of the articulation without the friction articulation of the damping device exerting frictional force. When the displacement equals the distance between limiters, the limiter acts as a stop with the connecting piece, this having as a consequence that the other articulating piece starts rotating and also causing the rotation of the articulation providing frictional resistance to rotation, which is in this case the third articulation. Therefore, this has as a consequence that the damping device starts exerting frictional force opposing the displacement produced by the oscillating element.

In a facultative embodiment, the damping device comprises additionally an anti-noise element coupled between the limiters.

This anti-noise element or *silentblock* has the advantage consisting in that it eliminates the noises produced in the damping device by the contacts of the limiters against the connecting piece or the shaft against the hole of the connecting piece. In a particular embodiment, the anti-noise element is made of an elastic material. Elastic materials are particularly adequate to perform this anti-noise function in an economical an easy manner. One of the preferred materials to perform this anti-noise or *silentblock* function is rubber and, for this reason, in a preferred embodiment of this anti-noise element, the *silentblock* is made of rubber.

In an advantageous manner, the anti-noise element has a shape comprising a first gasket and a second gasket, the connecting piece being arranged between both gaskets of the anti-noise element. So, noise is avoided in both directions of displacement.

In a facultative embodiment, the hole of the connecting piece has a perimeter geometrically coincident with the perimeter of the shaft, preferably in a circular manner.

In the case of the connection comprised between the shaft of the first articulating piece and the hole of the connecting piece, the relative size of the second end of the first articulating piece and the hole of the connecting piece is such that the connection between the connecting piece and the first articulating piece has clearance enough to allow lineal movement of the first articulating piece and rotation of the first articulating piece about its torsion axis.

The fact of having the same geometry in the perimeter of the shaft and the perimeter of the hole facilitates the assembly of the shaft in the hole and facilitates the possibility the articulating piece has to rotate about its torsion axis. Obviously, the dimension of the perimeter of the hole must be bigger than the dimension of the perimeter of the shaft to ease the rotation of the articulating piece about its torsion axis.

In a facultative embodiment, the connecting piece has a central region in which the hole is located, one of the orifices of the lugs is of a bigger size than the central region, and at least one end of the connecting piece has a protuberance limiting the displacement of the connecting piece in the direction of the rotation axis.

The advantage of this design of a connecting piece consists in that several functions are integrated therein, such as the function as the hole of the variable articulating piece and the function consisting in defining the position of the connecting piece in the rotation axis. Thereby, the amount of pieces of the damping device can be minimized to reduce the costs of the same as well as to make the manufacturing process be easier.

In this facultative embodiment, one of the orifices of one of the lugs of the first end of the second articulating piece comprises a slot. Advantageously, the slot is adapted to facilitate the insertion of the connecting piece, the assembly costs being thereby reduced.

In this facultative embodiment, the first end of the connecting piece comprises a tip with a protuberance adequate to be inserted into the slot. Advantageously, the tip is adapted to ease the insertion of the connecting piece into the orifices of the lugs of the second articulating piece, the assembly costs being thereby reduced. The protuberance acts as an anti-return element and avoids that the connecting piece unhooks in case of suffering a vibration or force in the direction of the axis, the optimal functioning of the damper being thereby ensured.

In this manner, the connecting piece has two stops that correspond to the second end of the connecting piece against one of the lugs and the central region against the other lug, in the mounting or insertion direction of the connecting piece into the orifices of the lugs of the first end of the second articulating piece. It also has two anti-return elements in the demounting direction of the connecting piece, which correspond to its central region against the lug with slot and to the protuberance of the first end of the connecting piece against the other lug.

In a second inventive aspect, the invention refers to a washing or drying machine comprising at least one vibration damping device according to the first inventive aspect.

The vibration damping devices can be fixed to the sides of the housing or to the lower part of the housing or in parallel to the suspension elements in the upper or lower part of the tub.

Said washing or drying machine can contain a plurality of damping devices placed on one or both sides of the tub as well as on the front or the top.

All features and/or steps of methods described in this specification (including the patent claims, the description and the drawings) can be combined in any combination, except for those mutually excluding combinations of such features.

These and further features and advantages of the invention are now described in greater detail by means of the following detailed description of a preferred embodiment. This embodiment is to be understood as an illustrative and non-limiting example, with reference to the figures of the drawing attached. In particular:
- Figure 1: shows an example of an embodiment of the damping device;
- Figure 2: shows a partially exploded view of an embodiment of a first articulating piece of the damping device;
- Figure 3: shows an example of an embodiment of the second articulating piece;
- Figure 4: shows a lateral view of an example of an embodiment of the second articulating piece;
- Figure 5: shows an example of an embodiment of the connecting piece;
- Figure 6: shows the connecting piece connected with the second articulating piece in an example;
- Figure 7: shows an example of an embodiment of the damping device with the variable articulating piece connected to the housing of a washing machine;
- Figure 8: shows an example of an embodiment of the damping device; and
- Figure 9: shows a feasible configuration of a washing or drying machine containing the vibration damping device.

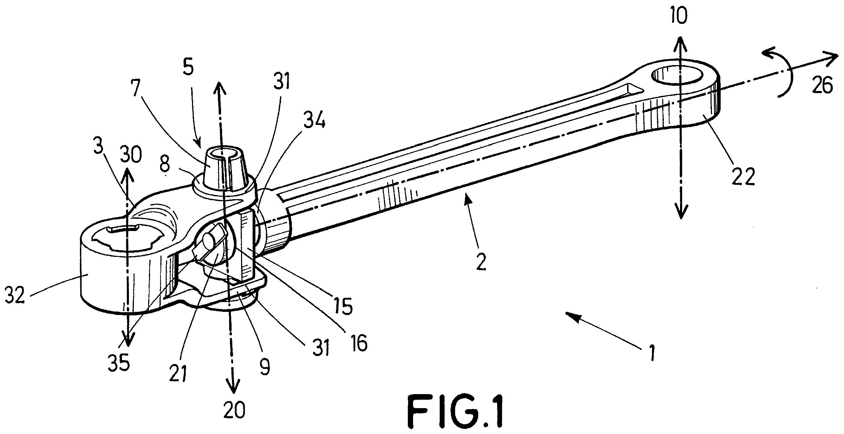

Figure 1 shows an example of an embodiment of a damping device 1. The first articulating piece 2 can be seen, which is the variable articulating piece in this case, comprising a second end 22, prepared to be connected to the tub 36 of a washing machine in an articulated manner by means of the rotation axis 10. The rotation axis 10 belongs to the first articulation 4, which connects the damping device 1 to the tub 36, and the second end 22 ends in a shaft 21 prepared to be inserted into the hole 16 of the connecting piece 7. The connecting piece 7 is also the first end 7 of the first articulating piece 2. Furthermore, the second articulating piece 3 can be observed, which comprises a first end 31 connected to the first end 7 of the first articulating piece 2 in an articulated manner by means of the rotation axis 20. The rotation axis 20 belongs to the second articulation 5 and a second end 32 of the second articulating piece 3 is provided to be connected to the housing 29 of a washing machine in an articulated manner by means of the rotation axis 30, the rotation axis 30 belonging to the third articulation 6.

In the first articulating piece 2, limiters 34 and 35 can also be seen, which act to delimit the free-stroke length of the damping device 1. The limiters 34 and 35 are arranged at the shaft 21 and contain the connecting piece 7 between them. In this case, the shaft 21 has a circular perimeter the same as the perimeter of the through hole 16 of the central region 15 of the connecting piece 7. This allows rotation of the first articulating piece 2 about its torsion axis 26, what enables this piece to absorb those vibrations that are generated in the tub 36 in the rest of directions different from the damping direction.

The first end 31 of the second articulating piece 3 has two lugs 8 and 9, each of them containing an orifice 11 and 12 through which the first end 7 of the first articulating piece 2 is inserted. The second end of the second articulating piece 3 is prepared to contain a friction element in the third articulation 6. In this case, the articulation 6 is the friction articulation.

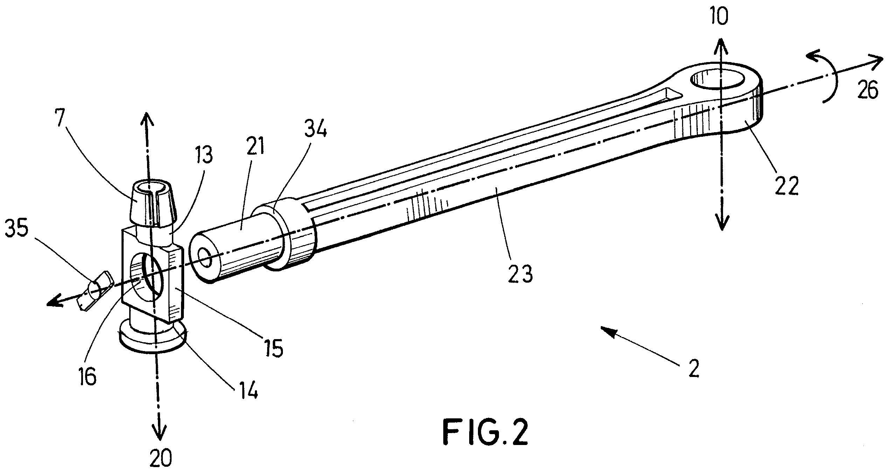

Figure 2 shows a partially exploded view of an embodiment of the first articulating piece 2 of the damping device 1 as disclosed herein. In this embodiment, the articulating piece 2 is the variable articulating piece. The first end 7 of the first articulating piece 2 is decoupled from the second end 22 of the first articulating piece 2 for the sake of clarity. In said figure, the shaft 21 of the first articulating piece 2 can be seen being arranged to be housed in the hole 16, a through hole in this case, arranged in the central region 15 of the connecting piece 7, in such a manner that the shaft 21 slides through the hole 16, the extension and compression of the first articulating piece 2 as well as the rotation of the first articulating piece 2 about its torsion axis 26 being thereby facilitated. In this case, both the shaft 21 of the first articulating piece 2 and the through hole 16 of the connecting piece 7 have a cylindrical shape. The shaft 21 ends at an end at the limiter 34 and, at the other end, at the limiter 35. The distance existing between the limiters 34 and 35 is the distance to which the variable articulating piece 2 can be extended or compressed and is the distance defining the free stroke of the damping device 1.

Owing to said connection between the connecting piece 7 and the second end 22 of the first articulating piece 2, the damping device 1 can compensate all displacements with its variation in length in axial direction and the forces in the rest of directions can be absorbed due to the freedom to rotate of the first articulating piece 2 has about its torsion axis 26. In this manner, the problems tackled in relation with the state of the art are solved. The torsion axis 26 is the shortest distance connecting the rotation axes 10 and 20, which are those joining the articulating piece 2 together.

Furthermore, it can also be observed that the second end 22 of the first articulating piece 2 comprises a substantially cylindrical shaft 21 and a central part 23. The second end 22 is prepared to be coupled to the tub 36 of a washing or drying machine in an articulated manner.

In other embodiments, the shaft 21 as well as the central part 23 of the first articulating piece 2 can have a different shape, such as a prism, having a regular or irregular polygonal cross-section, with a star-shaped prism having a plurality of tips, with a cross-shaped cross-section.

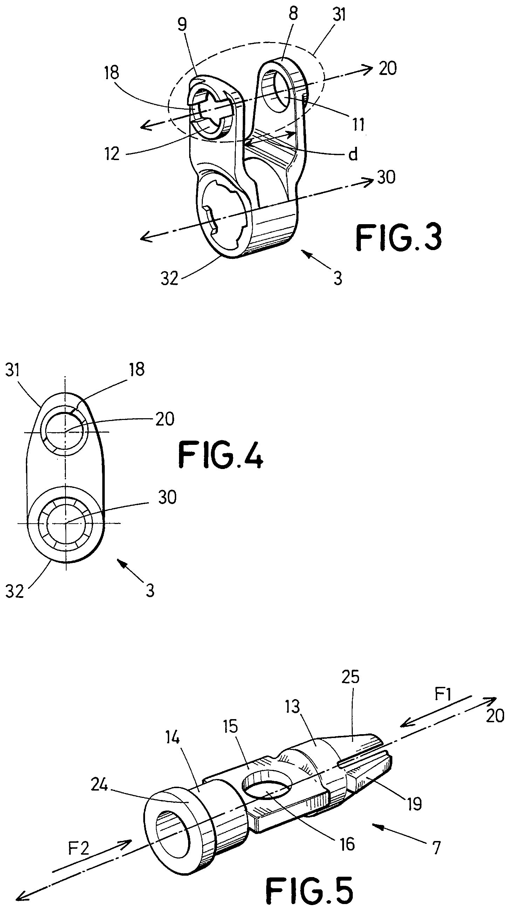

Figure 3 shows a particular embodiment of a second articulating piece 3. In this embodiment, the second articulating piece 3 comprises a first end 31 comprising two lugs 8, 9, each of them comprising an orifice 11, 12 and a second end 32 adapted to be connected to a housing 29 of a washing machine by means of an articulated joint that allows rotation about a third rotation axis 30, which will form the third articulation 6.

In this embodiment, the lugs 8, 9 are substantially plane, are spaced apart from one another in a distance d and are arranged substantially in parallel one respect to another, the orifices 11, 12 being placed in the same rotation axis 20 substantially perpendicular to the imaginary planes containing the lugs 8, 9. In a particular configuration, the distance (d) between both lugs 8, 9 ranges from 1 to 6 cm. This rotation axis 20 forms part of the second articulation 5.

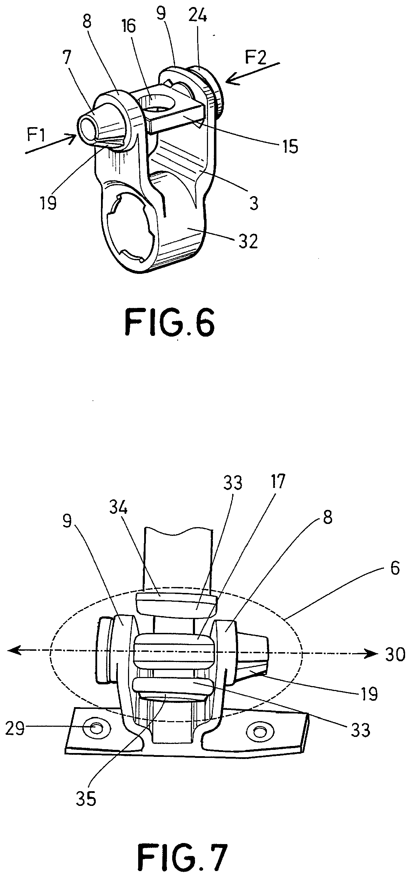

The shape of the orifices 11, 12 of the lugs 8, 9 of the first end 31 of the second articulating piece 3 is adapted to house the ends of the connecting piece 7. In this particular configuration, the orifice 12 of the first end 31 of the second articulating piece 3 has a slot 18 adapted to facilitate the assembly of the connecting piece 7, making possible that the central region 15 of the connecting piece 7 is housed between the lugs 8, 9, as it will be shown below in figure 6.

Figure 4 shows a profile view of the second articulating piece 3 shown in figure 3. In this figure, the second rotation axis 20 and the third rotation axis 30, about which the second articulating piece 3 can rotate, are perpendicular to the figure plane. On the one side, the rotation axis 20 of the second articulation 5, about which the first articulating piece 2 rotates, which is connected to the second articulating piece 3 by means of the connecting piece 7 housed in the orifices 11, 12 of the lugs 8, 9 of the first end 31 of the second articulating piece 3. On the other side, the rotation axis 30 of the third articulation 6, about which the second end 32 of the second articulating piece 3 rotates with respect to the housing 29 of a washing machine.

Figure 5 shows a particular embodiment of the connecting piece 7. The connecting piece 7 comprises two ends 13, 14 and a substantially plane central region 15 placed between said ends 13, 14. The central region 15 comprises a through hole 16 perpendicular to the rotation axis 20 connecting both ends of the connecting piece 7.

The size of the ends 13, 14 of the connecting piece 17 is substantially the same as or smaller than the size of the orifices 11, 12 of the two lugs 8, 9 of the second articulating piece 3. In this manner, the ends 13, 14 of the connecting piece 17 can pass through the orifices 11, 12 of the lugs 8, 9 and rotation of the connecting piece 7 about the rotation axis 20 is allowed.

It may be also observed that the ends 13, 14 of the connecting piece 7 have at least a portion of a cylindrical shape, as it is shown in figure 5. In other examples of an embodiment, the ends can have a cross-section with another shape, provided that their section and size are adequate to allow rotation of the connecting piece 7 about its longitudinal axis 20 when the connecting piece 7 is housed in the orifices 11, 12 of the two lugs 8, 9 of the first end 31 of the second articulating piece 3. In a particular configuration, the ends 13, 14 of the connecting piece 7 can have a cross-section in the form of a polygon, of a star polygon or a cross polygon.

In figure 5, it can also be seen that the first end 13 of the connecting piece 7 comprises a tip-shaped end part 25. This tip shape is adapted to facilitate the insertion of the connecting piece 7 into the orifices 11, 12 of the two lugs 8, 9 of the second articulating piece 3 when the connecting piece 7 is mounted into the second articulating piece 3. The tip 25 of the first end 13 of the connecting piece 7 comprises additionally a protuberance 19, which is adapted to act as an anti-return element and secure the correct positioning between the first end 13 of the connecting piece 7 and the corresponding lug 8 of the second articulating piece 3. Said protuberance 19 is adapted to pass through the slot 18 in the lug 9 of the second articulating piece 3. Said protuberance 19 acts as an anti-return element against the lug 8 and avoids the backward movement of the connecting piece 7, so that it does not unhook in case of suffering a vibration or force F1 in the direction of the longitudinal axis 20, in the direction from the first end 13 to the second end 14 of the connecting piece 7. Thereby, the correct position of the connecting piece 7 and the optimum functioning of the damper 1 are guaranteed.

The central region 15 of the connecting piece 7 is smaller than the orifice 12 in the slot 18 area and bigger than the orifice 12 in the area without any slot. In this manner, the central region 15 can pass through the slot 18 of the orifice 12 of the lug 9 in the assembly position to rotate it then 90° in any of both rotating directions (clockwise or anti-clockwise) about the rotation axis 20, the central region 15 acting as the anti-return element against the lug 9. In this manner, it is allowed that the connecting piece 7 passes through the orifice the slot 18 has, at the same time as the backward movement of the connecting piece 7 is avoided, so that it does not unhook in case of suffering a vibration or force F1 in the direction of the longitudinal axis 20, in the direction from the first end 13 to the second end 14 of the connecting piece 7. Thereby, the correct position of the connecting piece 7 and the optimum functioning of the damper 1 are guaranteed.

The size of the central region 15 is bigger than the size of the orifice 11 of the lug 8. So, it is avoided that the central region 15 passes through the orifice 11 and, thereby, that the connecting piece 7 unhooks in case of suffering a vibration or force F2 in the direction of the longitudinal axis 20, in the direction from the second end 14 to the first end 13 of the connecting piece 7. Thereby, the correct position of the connecting piece 7 and the optimum functioning of the second articulated joint are guaranteed.

The second end 14 of the connecting piece 7 comprises additionally an end portion 24 of a bigger size than the orifice 12 of the lug 9 of the second articulating piece 3. The end portion 24 is adapted to secure the connection between the second articulating piece 3 and the second end 14 of the connecting piece 7. In this manner, it is avoided that the connecting piece 7 unhooks in case of suffering a vibration or force F2 in the direction of the longitudinal axis 20, in the direction from the second end 14 to the first end 13 of the connecting piece 7. Thereby, the correct position of the connecting piece 7 and the optimum functioning of the second articulated joint are guaranteed.

In this manner, the connecting piece 7 has up to two anti-return elements in the case of suffering a force or vibration F1 in the direction of the rotation axis 20, in the direction from the first end 13 to the second end 14, such as the protuberance 19 against the lug 8 and the central region 15 against the lug 9.

Equally, the connecting piece 7 has up to two anti-return elements in the case of suffering a force or vibration F2 in the direction of the rotation axis 20, in the direction from the second end 14 to the second end 13, such as the end portion 24 against the lug 9 and the central region 15 against the lug 8.

Figure 6 shows the connecting piece 7 mounted into the second articulating piece 3. In this figure, the anti-return effect of the protuberance 19 as well as the same anti-return effect in both directions of the rotation axis 20 of the central region 15 and of the end portion 24 can be observed. In the particular case that a vibration or force F1, F2 is exerted in the direction of the rotation axis 20 of the connecting piece 7, the connecting piece 7 would remain being housed between the lugs 8, 9 of the first end 31 of the second articulating piece 3.

Figure 7 shows an example of an embodiment of the damping device 1 with the variable articulating piece connected to the housing 29 of a washing machine. In this case, the variable articulating piece is the second articulating piece 3. The connecting piece 7 is housed between the lugs 8, 9, in this case, in the third articulation 6, which is the joint articulated to the housing 29. In this case, the connecting piece 7 is the second end 32 of the second articulating piece 3, while the first end 31 of the second articulating piece 3 ends with a shaft 21 of a cylindrical perimeter in this case. The protuberance 19 can also be observed acting as an anti-return element against the lug 8. The shaft 21 comprises two limiters 34 and 35 containing the central region 15 of the connecting piece 7. In this case, the limiters 34 and 35 contain a second silentblock 33, in such a manner that they strike against the first anti-noise element or silentblock 17. Since both pieces that strike against each other are made of rubber, noise is reduced and the lifetime of both pieces is extended. In this embodiment, the damping device 1 comprises two silentblocks 17, 33, so that, when the free stroke of the second articulating piece 3 is covered, a silentblock 17 strikes against the other silentblock 33, the second silentblock 33 being the one that damps the impact and prolongs the lifetime of the first *silentblock* 17.

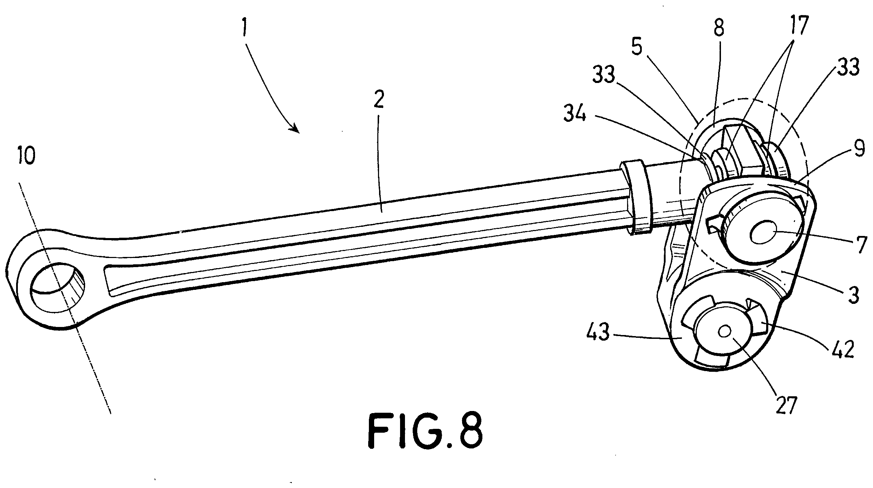

Figure 8 shows a particular embodiment of the damping device 1 comprising a first variable articulating piece 2 and a second articulating piece 3. In this case, the friction articulation is the third articulation 6 that comprises a bushing 43 at the second end 32 of the second articulating piece 3 and a bolt 27. A friction element 42 is arranged being trapped between the bushing 43 and the bolt 27. The second articulation 5 comprises a connecting piece 7 acting as the first end of the first articulating piece 2. The connecting piece 7 is housed between the lugs 8, 9 of the first end 31 of the second articulating piece 3. The connecting piece 7 comprises a through hole 16 in its central region 15 allowing that the shaft 21 belonging to the first articulating piece 2 passes through it. The variable articulating piece 2, that is extensible or compressible, also comprises a silentblock 17, one on each side of the central region 15 of the connecting piece 7, and a second silentblock 33 between the limiters 34 and 35 surrounding the first silentblock 17. Thereby, the free stroke of the articulating piece 2 is defined as the distance between the first silentblock 17 and the second silentblock 33. The first limiter 34 is directly included in the shaft 21. In this particular embodiment, the second limiter 35 (see figure 2) is a stop that is fixed to the shaft 21 in a positive fit.

In figure 8, it is possible to observe the advantage with great clarity, since a vibration damping device 1 as disclosed herein is shown having a free-stroke area in the first articulating piece 2 and allowing rotation of the first articulating piece 2 about its torsion axis 26, which can be manufactured in an easier and more economical manner than those currently existing in the state of the art.

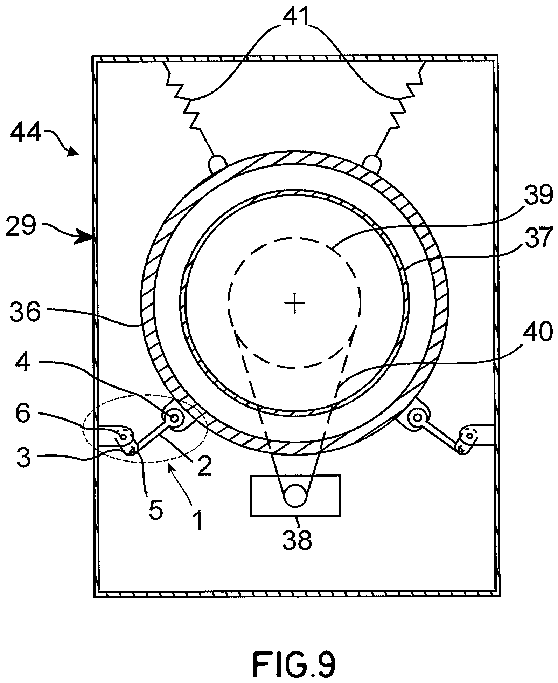

Figure 9 shows a feasible configuration of a washing or drying machine 44 containing at least one vibration damping device 1 according to the invention. In this particular example, a tub 36 is shown, which comprises a washing drum 37 actuated by a motor 38 that transmits the movement to the drum 37 by means of a pulley mechanism 39 fixedly arranged at the washing drum 37 and connected to the motor element 38 by a belt 40. Said tub 36 is connected to the housing 29 by means of suspension elements 41 and two vibration damping devices 1 according to the invention. As it is shown in figure 9, the vibration damping devices 1 are fixed to the sides of the housing 29 but they could be fixed to the lower part of the housing 29 or in parallel to the suspension elements 41 in the top or lower part of the tub 36.

A preferred embodiment comprises three damping devices 1, two of them preferably arranged on a side of the tub 36 and the third one on the other side of said tub 36.

In the case of e.g. a washing machine having an oscillating group whose weight amounts to about 50 kg, it is usual to have three dampers, two of them on the left side and one of them on the right side of the tub in which the nominal frictional forces of the radial dampers amount to 30 N to 60 N.

It is also possible to arrange four damping devices 1, two preferably arranged on each side of the tub 36.

**LIST OF REFERENCE NUMERALS**

| | | | |
|---|---|---|---|
| 1. | Vibration damping device | 34. | First limiter |
| 2. | First articulating piece | 35. | Second limiter |
| 3. | Second articulating piece | 36. | Tub |
| 4. | First articulation | 37. | Washing drum |
| 5. | Second articulation | 38. | Motor |
| 6. | Third articulation | 39. | Pulley mechanism |
| 7. | Connecting piece | 40. | Belt |
| 8. | Lug | 41. | Suspension elements |
| 9. | Lug | 42. | Friction element |
| 10. | Rotation axis | 43. | Bushing |
| 11. | Lug orifice | 44. | Washing or drying machine |
| 12. | Lug orifice | | |
| 13. | First end of the connecting piece | | |
| 14. | Second end of the connecting piece | | |
| 15. | Central region of the connecting piece | | |
| 16. | Through hole of the central region | | |
| 17. | Anti-noise element or first *silentblock* | | |
| 18. | Slot | | |
| 19. | Protuberance | | |
| 20. | Rotation axis | | |
| 21. | Shaft | | |
| 22. | Second end of the first articulating piece | | |
| 23. | Central part of the first articulating piece | | |
| 24. | End portion of the connecting piece | | |
| 25. | Tip of the connecting piece | | |
| 26. | Torsion axis of the first articulating piece | | |
| 27. | Bolt | | |
| 29. | Housing | | |
| 30. | Rotation axis | | |
| 31. | First end of the second articulating piece | | |
| 32. | Second end of the second articulating piece | | |
| 33. | Second *silentblock* | | |

## Claims

1. A vibration damping device (1) for a tub (36) of a washing or drying machine also comprising a housing (29), the device comprising:
a first articulating piece (2), provided to be connected to the tub (36) in an articulated manner by means of a first articulation (4) that allows rotation about a first rotation axis (10), and connected to a second articulating piece (3) in an articulated manner by means of a second articulation (5) that allows rotation about a second rotation axis (20), and the second articulating piece (3) being provided to be connected to the housing (29) in an articulated manner by means of a third articulation (6) that allows rotation about a third rotation axis (30), in which at least one from the first articulation (4), the second articulation (5) and the third articulation (6) is an articulation that provides frictional resistance to rotation, **characterized in that** the distance between the rotation axes of an articulating piece is variable by extending or contracting one of the articulating pieces, while there is no rotatory movement in the articulation(s) that provide frictional resistance to rotation.

2. The vibration damping device (1) according to claim 1, **characterized in that** the angle formed by the orthogonal projection of the first rotation axis (10) and of the second rotation axis (20) on a plane perpendicular to a torsion axis (26) of the first articulating piece (2) and/or the angle formed by the orthogonal projection of the second rotation axis (20) and of the third rotation axis (30) on a plane perpendicular to a torsion axis of the second articulating piece (3) is or are variable.

3. The vibration damping device (1) according to claim 1 or 2, **characterized in that** the first articulating piece (2) has a first end (7) and a second end (22), the second end (22) provided to be connected to the tub (36) by means of the first articulation (4) in an articulated manner, the second articulating piece (3) has a first end (31) and a second end (32), the first end (31) of the second articulating piece (3) being connected to the first end (7) of the first articulating piece (2) by means of the second articulation (5) in an articulated manner, and the second end (32) of the second articulating piece (3) being provided to be connected to the housing (29) by means of the third articulation (6) in an articulated manner, wherein the first end and the second end are connected having limited freedom of longitudinal movement one respect to another between two limiters (34, 35) in at least one of the articulating pieces (2, 3) in the manner of a variable articulating piece.

4. The vibration damping device (1) according to claim 3, **characterized in that** the longitudinal movement distance between the limiters (34, 35) amounts to 1 mm to 30 mm, preferably to 3 mm to 20 mm, and more preferably to 5 mm to 10 mm.

5. The vibration damping device (1) according to any preceding claim, **characterized in that** the first articulating piece (2) has a first end (7) and a second end (22), the second end (22) provided to be connected to the tub (36) by means of the first articulation (4) in an articulated manner, the second articulating piece (3) has a first end (31) and a second end (32), the first end (31) of the second articulating piece (3) being connected to the first end (7) of the first articulating piece (2) by means of the second articulation (5) in an articulated manner, and the second end (32) of the second articulating piece (3) being provided to be connected to the housing (29) by means of the third articulation (6) in an articulated manner, wherein the first end and the second end of at least one of the variable articulating pieces (2, 3) are connected having freedom of torsional movement one respect to another.

6. The vibration damping device (1) according to one of claims 3 to 5, **characterized in that** the connection between the first end (7) and the second end (22) of the variable articulating piece (2) comprises a hole (16) at an end and a shaft (21) at the other end, which is inserted into the hole (16) having freedom of lineal movement.

7. The vibration damping device (1) according to claim 6, **characterized in that** the connection between the first end (7) and the second end (22) of the variable articulating piece (2) comprises a hole (16) at an end and a shaft (21) at the other end, which is inserted into the hole (16) having freedom of torsional movement.

8. The vibration damping device (1) according to one of claims 6 and 7, **characterized in that** the variable articulating piece (2) is connected to at least one articulation (5) by means of a bolt (27) arranged at the rotation axis having freedom to rotate and the bolt (27) is fixedly arranged at an end of the variable articulating piece (2) forming a connecting piece (7).

9. The vibration damping device (1) according to claim 8, **characterized in that** the second articulating piece (3) comprises additionally:
two U-shaped lugs (8, 9) at its first end (31), each comprising an orifice (11, 12) and being arranged spaced apart from one another, and the first end (7) of the first variable articulating piece (2) is the connecting piece (7) that is connected to the orifices (11, 12) of the lugs (8, 9), and wherein the shaft (21) arranged at the second end (22) of the first variable articulating piece (2) is inserted into the hole (16) of the connecting piece (7).

10. The vibration damping device (1) according to one of claims 8 and 9, **characterized in that** the shaft (21) comprises the limiters (34, 35) and the connecting piece (7) is arranged between both of them.

11. The vibration damping device (1) according to one of claims 3 to 10, **characterized in that** it comprises additionally an anti-noise element (17) coupled between the limiters (34, 35).

12. The vibration damping device (1) according to claim 11, **characterized in that** the anti-noise element (17) is made of an elastic material such as gum or rubber.

13. The vibration damping device (1) according to any of claims 6 to 12, **characterized in that** the hole (16) of the connecting piece (7) has a perimeter geometrically coincident with the perimeter of the shaft (21), preferably in a circular manner.

14. The vibration damping device (1) according to any of claims 8 to 13, **characterized in that** the connecting piece (7) has a central region (15) in which the hole (16) is located, one of the orifices (12) of the lugs (9) is of a bigger size than the central region (15), and at least one end (13) of the connecting piece (7) has a protuberance (19) limiting the displacement of the connecting piece (7) in the direction of the rotation axis.

15. A washing or drying machine having a vibration damping device (1) according to any of the preceding claims.

## Patentansprüche

1. Schwingungsdämpfvorrichtung (1) für einen Laugenbehälter (36) einer Waschmaschine oder eines Trockners, die/der auch ein Gehäuse (29) umfasst, wobei die Vorrichtung Folgendes umfasst:
ein erstes Gelenkstück (2), das zum gelenkigen Verbinden mit dem Laugenbehälter (36) mithilfe eines ersten Gelenks (4), welches ein Drehen um eine erste Drehachse (10) ermöglicht, und zum gelenkigen Verbinden mit einem zweiten Gelenkstück (3) mithilfe eines zweiten Gelenks (5) vorgesehen ist, welches ein Drehen um eine zweite Drehachse (20) ermöglicht, und wobei das zweite Gelenkstück (3) zum gelenkigen Verbinden mit dem Gehäuse (29) mithilfe eines dritten Gelenks (6) vorgesehen ist, welches ein Drehen um eine dritte Drehachse (30) ermöglicht, wobei es sich bei dem ersten Gelenk (4), dem zweiten Gelenk (5) und/oder dem dritten Gelenk (6) um ein Gelenk handelt, das für einer Drehung entgegenwirkenden Reibwiderstand sorgt, **dadurch gekennzeichnet, dass** der Abstand zwischen den Drehachsen eines Gelenkstücks, während es in den Gelenken, die für einer Drehung entgegenwirkenden Reibwiderstand sorgen, zu keiner Drehbewegung kommt, durch Aus- oder Einfahren eines der Gelenkstücke änderbar ist.

2. Schwingungsdämpfvorrichtung (1) nach Anspruch 1, **dadurch gekennzeichnet, dass** der durch die orthogonale Projektion der ersten Drehachse (10) und der zweiten Drehachse (20) auf eine zu einer Torsionsachse (26) des ersten Gelenkstücks (2) senkrechte Ebene gebildete Winkel und/oder der durch die orthogonale Projektion der zweiten Drehachse (20) und der dritten Drehachse (30) auf eine zu einer Torsionsachse des zweiten Gelenkstücks (3) senkrechte Ebene gebildete Winkel änderbar sind/ist.

3. Schwingungsdämpfvorrichtung (1) nach Anspruch 1 oder 2, **dadurch gekennzeichnet, dass** das erste Gelenkstück (2) ein erstes Ende (7) und ein zweites Ende (22) aufweist, wobei das zweite Ende (22) zum gelenkigen Verbinden mit dem Laugenbehälter (36) mithilfe des ersten Gelenks (4) vorgesehen ist, das zweite Gelenkstück (3) ein erstes Ende (31) und ein zweites Ende (32) aufweist, wobei das erste Ende (31) des zweiten Gelenkstücks (3) mithilfe des zweiten Gelenks (5) mit dem ersten Ende (7) des ersten Gelenkstücks (2) gelenkig verbunden ist und das zweite Ende (32) des zweiten Gelenkstücks (3) zum gelenkigen Verbinden mit dem Gehäuse (29) mithilfe des dritten Gelenks (6) vorgesehen ist, wobei das erste Ende und das zweite Ende zwischen zwei Begrenzern (34, 35) bei mindestens einem der Gelenkstücke (2, 3) wie ein variables Gelenkstück in Bezug aufeinander mit begrenzter Bewegungsfreiheit in Längsrichtung miteinander verbunden sind.

4. Schwingungsdämpfvorrichtung (1) nach Anspruch 3, **dadurch gekennzeichnet, dass** der Bewegungsabstand zwischen den Begrenzern (34, 35) in Längsrichtung 1 mm bis 30 mm, vorzugsweise 3 mm bis 20 mm und besonders bevorzugt 5 mm bis 10 mm beträgt.

5. Schwingungsdämpfvorrichtung (1) nach einem der vorhergehenden Ansprüche, **dadurch gekennzeichnet, dass** das erste Gelenkstück (2) ein erstes Ende (7) und ein zweites Ende (22) aufweist, wobei das zweite Ende (22) zum gelenkigen Verbinden mit dem Laugenbehälter (36) mithilfe des ersten Gelenks (4) vorgesehen ist, das zweite Gelenkstück (3) ein erstes Ende (31) und ein zweites Ende (32) aufweist, wobei das erste Ende (31) des zweiten Gelenkstücks (3) mithilfe des zweiten Gelenks (5) mit dem ersten Ende (7) des ersten Gelenkstücks (2) gelenkig verbunden ist und das zweite Ende (32) des zweiten Gelenkstücks (3) zum gelenkigen Verbinden mit dem Gehäuse (29) mithilfe des dritten Gelenks (6) vorgesehen ist, wobei das erste Ende und das zweite Ende mindestens eines der variablen Gelenkstücke (2, 3) mit Torsionsbewegungsfreiheit in Bezug aufeinander verbunden sind.

6. Schwingungsdämpfvorrichtung (1) nach einem der Ansprüche 3 bis 5, **dadurch gekennzeichnet, dass** die Verbindung zwischen dem ersten Ende (7) und dem zweiten Ende (22) des variablen Gelenkstücks (2) an einem Ende ein Loch (16) und am anderen Ende eine Achse (21) umfasst, die mit linearer Bewegungsfreiheit in das Loch (16) eingeführt ist.

7. Schwingungsdämpfvorrichtung (1) nach Anspruch 6, **dadurch gekennzeichnet, dass** die Verbindung zwischen dem ersten Ende (7) und dem zweiten Ende (22) des variablen Gelenkstücks (2) an einem Ende ein Loch (16) und am anderen Ende eine Achse (21) umfasst, die mit Torsionsbewegungsfreiheit in das Loch (16) eingeführt ist.

8. Schwingungsdämpfvorrichtung (1) nach einem der Ansprüche 6 und 7, **dadurch gekennzeichnet, dass** das variable Gelenkstück (2) mithilfe eines Bolzens (27), der mit Rotationsfreiheit an der Drehachse angeordnet ist, mit mindestens einem Gelenk (5) verbunden und der Bolzen (27) fest an einem Ende des variablen Gelenkstücks (2) angeordnet ist, das ein Verbindungsstück (7) bildet.

9. Schwingungsdämpfvorrichtung (1) nach Anspruch 8, **dadurch gekennzeichnet, dass** das zweite Gelenkstück (3) zusätzlich Folgendes umfasst:
zwei U-förmige Laschen (8, 9) an seinem ersten Ende (31), die jeweils eine Öffnung (11, 12) umfassen und voneinander beabstandet angeordnet sind, und wobei das erste Ende (7) des ersten variablen Gelenkstücks (2) das mit den Öffnungen (11, 12) der Laschen (8, 9) verbundene Verbindungsstück (7) ist, und wobei die am zweiten Ende (22) des ersten variablen Gelenkstücks (2) angeordnete Achse (21) in das Loch (16) des Verbindungsstücks (7) eingeführt ist.

10. Schwingungsdämpfvorrichtung (1) nach einem der Ansprüche 8 und 9, **dadurch gekennzeichnet, dass** die Achse (21) die Begrenzer (34, 35) umfasst und das Verbindungsstück (7) zwischen den beiden angeordnet ist.

11. Schwingungsdämpfvorrichtung (1) nach einem der Ansprüche 3 bis 10, **dadurch gekennzeichnet, dass** sie zusätzlich ein schalldämpfendes Element (17) umfasst, das zwischen die Begrenzer (34, 35) gekoppelt ist.

12. Schwingungsdämpfvorrichtung (1) nach Anspruch 11, **dadurch gekennzeichnet, dass** das schalldämpfende Element (17) aus einem elastischen Material wie Kautschuk oder Gummi hergestellt ist.

13. Schwingungsdämpfvorrichtung (1) nach einem der Ansprüche 6 bis 12, **dadurch gekennzeichnet, dass** das Loch (16) des Verbindungsstücks (7) einen Umfang aufweist, der geometrisch vorzugsweise rund mit dem Umfang der Achse (21) übereinstimmt.

14. Schwingungsdämpfvorrichtung (1) nach einem der Ansprüche 8 bis 13, **dadurch gekennzeichnet, dass** das Verbindungsstück (7) einen Mittelbereich (15) aufweist, in dem sich das Loch (16) befindet, eine der Öffnungen (12) der Laschen (9) größer ist als der Mittelbereich (15) und mindestens ein Ende (13) des Verbindungsstücks (7) einen Vorsprung (19) aufweist, der die Verlagerung des Verbindungsstücks (7) in Richtung der Drehachse begrenzt.

15. Waschmaschine oder Wäschetrockner mit einer Schwingungsdämpfvorrichtung (1) nach einem der vorhergehenden Ansprüche.

## Revendications

1. Dispositif d'amortissement des vibrations (1) pour une cuve (36) d'un lave-linge ou d'un sèche-linge comprenant également une carcasse (29), le dispositif comprenant : une première pièce d'articulation (2), prévue afin d'être reliée à la cuve (36) d'une façon articulée au moyen d'une première articulation (4) qui permet la rotation autour d'un premier axe de rotation (10) et reliée à une deuxième pièce d'articulation (3) d'une façon articulée au moyen d'une deuxième articulation (5) qui permet la rotation autour d'un deuxième axe de rotation (20), et la deuxième pièce d'articulation (3) étant prévue afin d'être reliée à la carcasse (29) d'une façon articulée au moyen d'une troisième articulation (6) qui permet la rotation autour d'un troisième axe de rotation (30), dans lequel au moins un parmi la première articulation (4), la deuxième articulation (5) et la troisième articulation (6) est une articulation qui offre une résistance frictionnelle envers la rotation, **caractérisé en ce que** la distance entre les axes de rotation d'une pièce d'articulation est variable en étendant ou en contractant l'une des pièces d'articulation, tandis qu'aucun mouvement rotatoire de la/des articulation(s) n'offre de résistance frictionnelle à la rotation.

2. Dispositif d'amortissement des vibrations (1) selon la revendication 1, **caractérisé en ce que** l'angle formé par la projection orthogonale du premier axe de rotation (10) et du deuxième axe de rotation (20) sur un plan perpendiculaire à un axe de torsion (26) de la première pièce d'articulation (2) et/ou l'angle formé par la projection orthogonale du deuxième axe de rotation (20) et du troisième axe de rotation (30) sur un plan perpendiculaire à un axe de torsion de la deuxième pièce d'articulation (3) est ou sont variable(s).

3. Dispositif d'amortissement des vibrations (1) selon la revendication 1 ou 2, **caractérisé en ce que** la première pièce d'articulation (2) possède une première extrémité (7) et une deuxième extrémité (22), la deuxième extrémité (22) est prévue afin d'être reliée à la cuve (36) au moyen de la première articulation (4) d'une façon articulée, la deuxième pièce articulée (3) possède une première extrémité (31) et une deuxième extrémité (32), la première extrémité (31) de la deuxième pièce articulée (3) étant reliée à la première extrémité (7) de la première pièce articulée (2) au moyen de la deuxième articulation (5) d'une façon articulée, et la deuxième extrémité (32) de la deuxième pièce articulée (3) étant prévue afin d'être reliée à la carcasse (29) au moyen de la troisième articulation (6) d'une façon articulée, dans lequel la première extrémité et la deuxième extrémité sont reliées en ayant une liberté de mouvement longitudinal restreinte l'une par rapport à l'autre entre deux limiteurs (34, 35) dans au moins une des pièces d'articulation (2, 3) à la façon d'une pièce d'articulation variable.

4. Dispositif d'amortissement des vibrations (1) selon la revendication 3, **caractérisé en ce que** l'écartement longitudinal entre les limiteurs (34, 35) est de 1 mm à 30 mm, de préférence de 3 mm à 20 mm et de façon particulièrement préférée de 5 mm à 10 mm.

5. Dispositif d'amortissement des vibrations (1) selon l'une quelconque des revendications précédentes, **caractérisé en ce que** la première pièce d'articulation (2) possède une première extrémité (7) et une deuxième extrémité (22), la deuxième extrémité (22) est prévue afin d'être reliée à la cuve (36) au moyen de la première articulation (4) d'une façon articulée, la deuxième pièce articulée (3) possède une première extrémité (31) et une deuxième extrémité (32), la première extrémité (31) de la deuxième pièce articulée (3) étant reliée à la première extrémité (7) de la première pièce articulée (2) au moyen de la deuxième articulation (5) d'une façon articulée, et la deuxième extrémité (32) de la deuxième pièce articulée (3) étant prévue afin d'être reliée à la carcasse (29) au moyen de la troisième articulation (6) d'une façon articulée, dans lequel la première extrémité et la deuxième extrémité d'au moins une des pièces d'articulation variable (2, 3) sont reliées en ayant une liberté de mouvement par torsion l'une par rapport à l'autre.

6. Dispositif d'amortissement des vibrations (1) selon l'une des revendications 3 à 5, **caractérisé en ce que** la liaison entre la première extrémité (7) et la deuxième extrémité (22) de la pièce d'articulation variable (2) comprend un trou (16) en une extrémité et un arbre (21) en l'autre extrémité, qui est inséré dans le trou (16) en ayant une liberté de mouvement linéaire.

7. Dispositif d'amortissement des vibrations (1) selon la revendication 6, **caractérisé en ce que** la liaison entre la première extrémité (7) et la deuxième extrémité (22) de la pièce d'articulation variable (2) comprend un trou (16) en une extrémité et un arbre (21) en l'autre extrémité, qui est inséré dans le trou (16) en ayant une liberté de mouvement par torsion.

8. Dispositif d'amortissement des vibrations (1) selon l'une des revendications 6 et 7, **caractérisé en ce que** la pièce d'articulation variable (2) est reliée à au moins une articulation (5) au moyen d'un boulon (27) disposé sur l'axe de rotation possédant une liberté de rotation et le boulon (27) est disposé de manière fixe en une extrémité de la pièce d'articulation variable (2) formant une pièce de liaison (7).

9. Dispositif d'amortissement des vibrations (1) selon la revendication 8, **caractérisé en ce que** la deuxième pièce d'articulation (3) comprend en outre :
deux ergots en forme de U (8, 9) en sa première extrémité (31), chacun comprenant un orifice (11, 12) et étant séparés l'un de l'autre, et la première extrémité (7) de la pièce d'articulation variable (2) est la pièce de liaison (7) qui est reliée aux orifices (11, 12) des ergots (8, 9), et dans lequel l'arbre (21) disposé en la deuxième extrémité (22) de la première pièce d'articulation variable (2) est inséré dans le trou (16) de la pièce de liaison (7).

10. Dispositif d'amortissement des vibrations (1) selon l'une des revendications 8 et 9, **caractérisé en ce que** l'arbre (21) comprend les limiteurs (34, 35) et la pièce de liaison (7) est disposée entre eux deux.

11. Dispositif d'amortissement des vibrations (1) selon l'une des revendications 3 à 10, **caractérisé en ce qu'**il comprend en outre un élément antibruit (17) couplé entre les limiteurs (34, 35).

12. Dispositif d'amortissement des vibrations (1) selon la revendication 11, **caractérisé en ce que** l'élément antibruit (17) est réalisé en un matériau élastique comme la gomme ou le caoutchouc.

13. Dispositif d'amortissement des vibrations (1) selon l'une quelconque des revendications 6 à 12, **caractérisé en ce que** le trou (16) de la pièce de liaison (7) possède un périmètre coïncidant géométriquement au périmètre de l'arbre (21), de préférence d'une façon circulaire.

14. Dispositif d'amortissement des vibrations (1) selon l'une quelconque des revendications 8 à 13, **caractérisé en ce que** la pièce de liaison (7) possède une région centrale (15) dans laquelle le trou (16) se trouve, l'un des orifices (12) des ergots (9) est de taille supérieure à la région centrale (15), et au moins une extrémité (13) de la pièce de liaison (7) possède une protubérance (19) limitant le déplacement de la pièce de liaison (7) dans la direction de l'axe de rotation.

15. Lave-linge ou sèche-linge possédant un dispositif d'amortissement des vibrations (1) selon l'une quelconque des revendications précédentes.
